# EUROPEAN PATENT SPECIFICATION

(11) **EP 2 479 352 B1**
(45) Date of publication and mention of the grant of the patent: **04.07.2018**
(21) Application number: 12152122.3
(22) Date of filing: 23.01.2012
(51) Int. Cl.: E03B 3/03, A01G 27/02

(54) **Stackable water storage module**
Stapelbares Wasseraufbewahrungsmodul
Module de stockage d'eau empilable

(30) Priority: 24.01.2011 GB 201101171
(43) Date of publication of application: 25.07.2012
(73) Proprietor: Design 4 Plastics Limited, Thorp Arch Estate Wetherby West Yorkshire LS23 7FG (GB)
(72) Inventor: Viner, Peter, Wetherby, Yorkshire LS22 7XN (GB)
(74) Representative: HGF Limited

(56) References cited:
- EP-A1- 1 654 923
- US-A- 4 779 378

## Description

### TECHNICAL FIELD

The present invention relates to water storage systems, in particular to water storage systems that are suitable for use in storing rainwater collected by the roofs of buildings.

### BACKGROUND

It is known to collect rainwater from domestic roof spaces in water butts (large, drum-like water storage containers) for domestic use, for example in garden irrigation. Such water butts are conventionally large open-topped drum-like vessels that store over 250L of water in a single water column in excess of 1m tall.

Disadvantageously, such water butts are complex to manufacture, due to their substantial size, and require to be manufactured to a high specification in order to withstand the water pressure experienced at the bottom of such a tall column of water. Due to their size, such water butts are difficult and expensive to transport and store. Additionally, bodies of water of such depth present a safety hazard through presenting a potential drowning risk to children and animals. Further, disadvantageously, where an outlet is provided, such water butts provide only a single outlet tap, close to the bottom of the vessel, which is accordingly inconvenient to use. Yet further, such water butts are typically unattractive, which is a particularly important consideration in a domestic garden setting.

It is known to provide a water butt with a planter (open-topped plant growing vessel) that fits onto the top of a conventional water butt, and which is provided with a wick that passes between a plant growing medium in the planter, through an aperture in the base of the planter, and reaches into the water butt beneath. The intention is that the wick should conduct water from within the water butt up to the growing medium, to provide a watering function for the plants growing in the planter.

Disadvantageously, such wicking arrangements only function effectively when there is a small vertical separation (e.g. a few centimetres) between the growing medium in the planter and the free surface of the water within the water butt. Accordingly, such wicking arrangements do not function effectively when the water level in the water butt drops, either through water being drawn out of the water butt through the tap, or through having been wicked out, bringing the operation of the wicking system into conflict with other uses of the stored water. Further, disadvantageously, such wicking arrangements can only function again when the water butt has been almost completely re-filled, for example by heavy rain, in the case of a system that collects water from a guttering downpipe. Disadvantageously, in the case that the wicking arrangement is not functioning, watering the plants in the planter requires that water from within the water butt is decanted into a separate vessel (e.g. watering can) which then requires to be raised above the level of the planter to enable the water to be poured onto the top of the planter. Yet further, due to the substantial height of the water butt, it is difficult to successfully mask the appearance of the water butt with foliage trailing down from a planter mounted as a lid above the water butt.

US4779378 discloses an integrable modular stackable multi-plant holder made up of one or more modular sections which are stackable and fit on a supporting base shaped as a saucer with upstanding sides. A cover rests upon the top of the uppermost modular section in the stack and has an opening in the centre, which is funnel-shaped to receive water for watering plants planted in soil within the one or more modular sections.

Accordingly, there remains a need for an improved water storage system.

### SUMMARY OF THE DISCLOSURE

According to a first aspect of the invention, there is provided a stackable water storage module comprising a base portion and a lid portion, wherein
the base portion is adapted to receive the lid portion,
the base portion has a base reservoir for storing water,
the lid portion is adapted to receive a further base portion,
the lid portion has a lid reservoir for storing water and a lid reservoir overflow adapted for water to overflow from the lid reservoir to the base reservoir,
the base portion has a base reservoir overflow adapted for water to overflow from the base reservoir to a lid reservoir of a further lid portion, and
the lid portion is adapted to receive a planter in fluid communication with the lid reservoir.

According to a second aspect of the invention, there is provided a water storage system comprising at least two base portions and a lid portion of a stackable water storage module according to the first aspect of the invention.

Advantageously, the present invention provides a water storage vessel in which:
- The lid reservoir retains water independently of the fill-level of the base reservoir.
- The lid reservoir can be re-filled independently of the base reservoir.
- The lid reservoir may be re-filled from a base reservoir.
- The lid reservoir overflow may prevent the planter from being over-watered, due to limiting the maximum depth of water in the lid reservoir.
- A plurality of base portions (without the drain tubes fitted, i.e. shell-like bodies only) may be stacked in a nested configuration, for ease of transportation and storage. A plurality of lid portions may be stacked in a nested configuration, for ease of transportation and storage.
- By provision of planters on a water storage system comprising a stack of modules, the appearance of the water storage system may be masked more easily and more effectively by overhanging foliage than for water butts provided with a single lid useable as a planter, as is known in the art.
- By provision of a stack of separate water modules, a water storage system may avoid high water pressures, facilitating manufacture with lower material costs and complexity.
- The modules permit versatile assembly by vertical stacking and lateral interconnection to conform to spatial requirements of the installation site.
- By the absence of vertical interconnection between modules, sealing issues are avoided, in particular avoiding the complex sealing issues associated with tall water columns that produce high water pressures.
- The modules may be interconnected to provide common bodies of water across a plurality of modules arranged at the same level.
- Detachable planters can be conveniently removed and reattached for the purposes of watering and re-potting.
- A drain tube can be provided for drawing water out of the base reservoir, and advantageously the drain tube may provide a higher flow rate than a tap (e.g. by avoiding a constriction of cross-sectional area of the flow stream, as typically occurs in taps).
- A transparent or translucent drain tube can serve as a base reservoir water level indicator.
- The provision of a drain tube or other outlet provides a raised source of water that is more convenient to use by gardeners with physical movement limitations for whom bending to the tap at the bottom of a conventional water butt may be difficult.
- The maximum water depth in a module is lower than in a conventional water butt, reducing the risk of drowning by children and animals.

The base portion and lid portion may be separately formed. The base portion may comprise a base portion body configured to nest with a further base portion body of a further base portion. The lid portion may be configured to nest with a further lid portion. Alternatively, the base portion and lid portion may be integrally formed.

The lid portion may be adapted to receive the planter at an edge of the lid portion. The lid portion may have a planter retention feature adapted to facilitate the retention of a planter by the lid portion.

The planter may be adapted to irrigate a growing medium contained therein by capillary action through growing medium that is provided within a reservoir communication portion of the planter. Alternatively, the planter may be provided with a wick adapted to irrigate a growing medium contained therein by wicking water from the lid reservoir into the growing medium.

The base portion may be provided with a drain tube. The entire drain tube may be a flexible tube. Alternatively, the drain tube may comprise a flexible tube portion, conveniently at or close to the fixed end of the tube. In a further alternative, the tube may pivot about its fixed end.

The lid portion may have a waste overflow port. The base portion may have a waste overflow port. A waste tube may be connected to a waste overflow port on the lid portion or base portion. Alternatively, a waste tube may be connected to collect water directly from a base reservoir overflow.

The module may comprise a support unit configured to fit with a base portion or a lid portion, the support unit having a water collection element and a support unit outlet tube, wherein the water collection element is adapted to collect water flowing onto the support unit from the base portion or lid portion and channel the water to the support unit outlet tube.

The outlet of the base reservoir overflow may be laterally offset from the inlet of the lid reservoir overflow in the orientation of normal use.

The module may be adapted to be interconnected with a further module in a lateral interconnection arrangement, in the orientation of normal use.

The water storage system may comprise a plurality of modules.

### BRIEF DESCRIPTION OF THE DRAWINGS

Embodiments of the invention are further described hereinafter with reference to the accompanying drawings, in which:
- Figure 1A shows a cross-sectional view of a pair of stacked water storage modules according to the present invention.
- Figure 1B shows an enlarged view of a planter attached to a water storage module.
- Figure 2A shows a cut-away view of a pair of stacked water storage modules according to the present invention.
- Figure 2B shows a cut-away view of three stacked water storage modules according to the present invention.
- Figure 2C shows a cut-away view of three stacked water storage modules and a support unit according to the present invention.
- Figure 3A shows a perspective view of a pair of stacked water storage modules according to the present invention.
- Figure 3B shows an exploded view of the modules of Figure 3A.
- Figure 4 shows a cross-sectional view of a 2x2 arrangement of stacked water modules according to the present invention.

### DETAILED DESCRIPTION

Like numbers refer to like elements throughout.

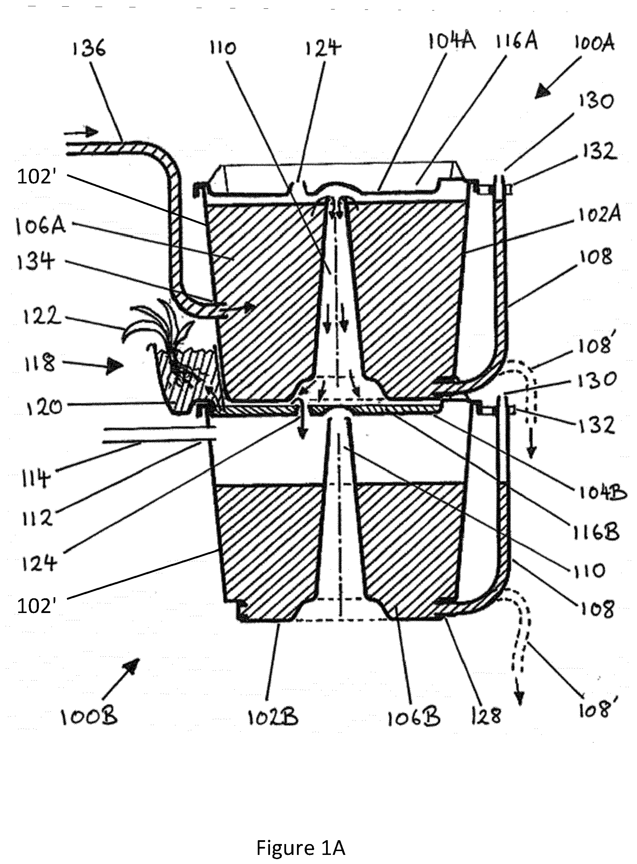

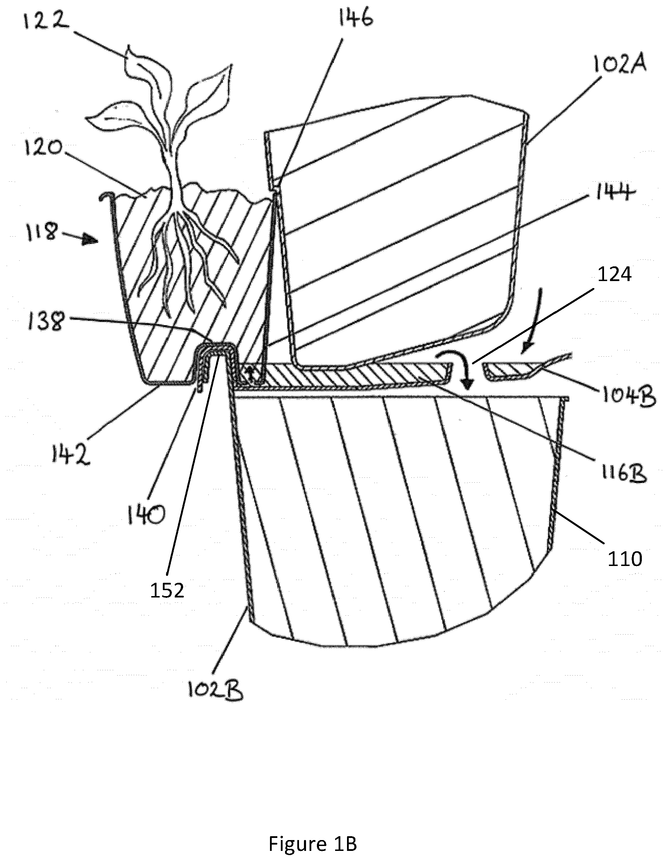

Figures 1A and 1B illustrates a cross-sectional view through a water storage system having a stacked pair of water storage modules 100 according to the present invention. Each module 100A and 100B has a base 102A and 102B and a lid 104A and 104B.

Each base 102A and 102B has a base reservoir 106A and 106B for storing water that may be drawn off through a drain tube 108, and a base reservoir overflow 110. The base reservoir overflow 110 comprises a channel that passes through the base reservoir 106 to the underside of the base 102A and 102B. The lower base 102B has a waste overflow port 112, located above the bottom of the lower base reservoir 106B, but at a lower level than the inlet of the base reservoir overflow 110 (in normal use), from which a waste tube 114 is connected to the local drainage system (not shown).

The lids 104A and 104B mate with the corresponding tops of the bases 102A and 102B, and have lid reservoirs 116A and 116B for providing water to planters 118 containing a growth medium 120 for plants 122. Each lid 104A and 104B also has a lid reservoir overflow 124, comprising a channel that passes through the lid reservoir 116A and 116B to the underside of the lid. One or more detachable planters 118 may be attached to each lid 104A and 104B.

Each base 102A and 102B has a base body 102' provided with an outlet connector 128 to which a drain tube 108 (or a tap or outlet pipe) is connected. The drain tube 108 may be a flexible tube with an open end 130 (i.e. free end, distal from the base 102). Alternatively, the drain tube may have a flexible tube portion at or close to the fixed end, such that the non-flexible portion further can be lowered and directed. Similarly, the drain tube may have a flexible portion at or close to the open end. In a further alternative arrangement, the drain tube may pivot above its fixed end in order to lower the open end.

The open end 130 is retained in a raised position above the top of the base reservoir 106A and 106B (i.e. above the level of the inlet to the base reservoir overflow 110) by an attachment means mounted on the lid 104B (or alternatively on the base 102B), such as a bracket 132 (e.g. a "C"-clip bracket). Alternatively, the free end of the drain tube 108 may be provided with an attachment mean, such as a hook moulding that may be engaged with a feature of the lid or base.

The upper base 102A of a stack of modules 100A and 100B may be provided with a filling port 134, and a filling tube 136 connecting between the filling port 134 and a source of water, such as a downpipe (not shown).

When the stack of modules 100A and 100B fills, water flows into the base reservoir 106A of the upper module 100A through the filling tube 136. (Alternatively the water may flow into the lid reservoir 116A in the lid 104 of the upper module 100A, and be channelled through the lid reservoir overflow 124 into the base 102A of the upper module 100A.) Once the base reservoir 106A of the upper module 100A is full, excess water flowing into that base reservoir overflows down the base reservoir overflow 110 and into the lid reservoir 116B of the lid 104B of the module 100B directly beneath the overflowing base reservoir. Similarly, once the lid reservoir 116B of the second module 100B is full, excess water flowing into that lid reservoir overflows through the lid reservoir overflow 124 and into the base reservoir 106B of the second module. Accordingly, when filling, water flowing into the uppermost reservoir overflows successively through an alternating stack of base reservoirs and lid reservoirs. Excess water flowing into the base reservoir 106B of the lower module 100B overflows down the waste tube 114, and returns to the downpipe or other connection to the local drainage system.

The sequential cascading of water in an alternating manner through the reservoirs of the lids and bases is achieved by laterally offsetting the outlets of the overflows 110 and 124 from the inlets of the overflows 124 and 110 (respectively) beneath, such that water emitted from an overflow passes into the reservoir beneath, and is directed away from the inlet of the overflow beneath.

When water is required, this can be accessed by lowering the end 130 of the drain tube 108 to a lower position 108', such that water can flow out, and replacing the end of the drain tube after use.

For clarity of illustration, Figure 1A shows only a single planter 118 received on the lid 104B and adjacent the base 102A, and having only a single drain tube 108 located on the opposite side of the base. However, it will be appreciated that more than one planter may be received on each lid and/or more than one drain tube may be provided on each base. Also, the drain tube may be longer than depicted, such that it has a longer reach, for example reaching to planters located on the opposite side of the base from the fixed end of the drain tube. Accordingly, conveniently, the drain tube of a base 102A can be used to water planters that are adjacent or at a lower level.

Conveniently the drain tube can comprise a transparent or translucent section of tube, such that the level of water within the corresponding base can be determined by inspection of the water level within the drain tube.

Conveniently the lid reservoirs in a stack of modules can be re-filled independently of the base reservoirs. Accordingly, in dry weather, water can be provided to the planters connected to a lid, without a requirement that any of the base reservoirs should be full. Such an arrangement permits the re-filling of the lid reservoirs from the base reservoirs.

Conveniently the bases and the lids are shaped such that they can each be stacked in a nested configuration, for ease of transportation and storage.

Figure 1B shows an enlarged view of the planter 118 of Figure 1A. The base of the planter 118 has a recess 138, which engages with a lip 140 of the lid 104B. The recess 138 separates a sealed base portion 142 from a reservoir communication portion 144. The reservoir communication portion 144 projects down into the lid reservoir 116, and has apertures to allow the ingress of water from the lid reservoir into the growing medium 120 by capillary action.

The planter 118 is detachable, such that the planter may conveniently be removed from the lid 104. Removal of the planter 118 may facilitate access to the lid reservoir 116B for re-filling. Additionally, removal of the planter 118 is useful for re-potting plants, and removing the planter to an alternative source of water, if required. The design of the planter 118 may be such that it is retained on the lid 104 by its centre of gravity being over the lid. Alternatively, a retention feature may be provided on the lid 104 or base 102 to facilitate the retention of the planter 118 on the lid (e.g. an upper edge of the planter may engage with a retention feature such as a rebate 146 of a base 102).

Alternatively (or additionally) to irrigation through capillary action, the planter may not project into the lid reservoir, but may be provided with a wick that conducts water from the lid reservoir to the growing medium. Such a wicking arrangement may be more effective than in the known prior art arrangements due to the provision of a smaller vertical separation between the growing medium and the free surface of water in the lid reservoir, and the independence of the wicking performance from the fill-level of the base reservoir.
Although in the stack of modules 100A and 100B of Figure 1A the upper lid 104A is the same as a the lower lid 104B, it will be appreciated that alternatively a dedicated upper lid may be provided, for example which omits features of the lids used lower in the stack of modulates.

Modules of the present invention are particularly suited to manufacture by plastic injection moulding. In the illustrated embodiments, the base and lid units 102 and 104 are formed separately. However, it will be appreciated that alternatively the base and lids may be formed integrally, for example by a rotational moulding process.

Advantageously the side walls of the bases are spaced further apart at the open end than at the closed end to permit stacking of bases for transport and storage. Similarly, the lids may be stackable.

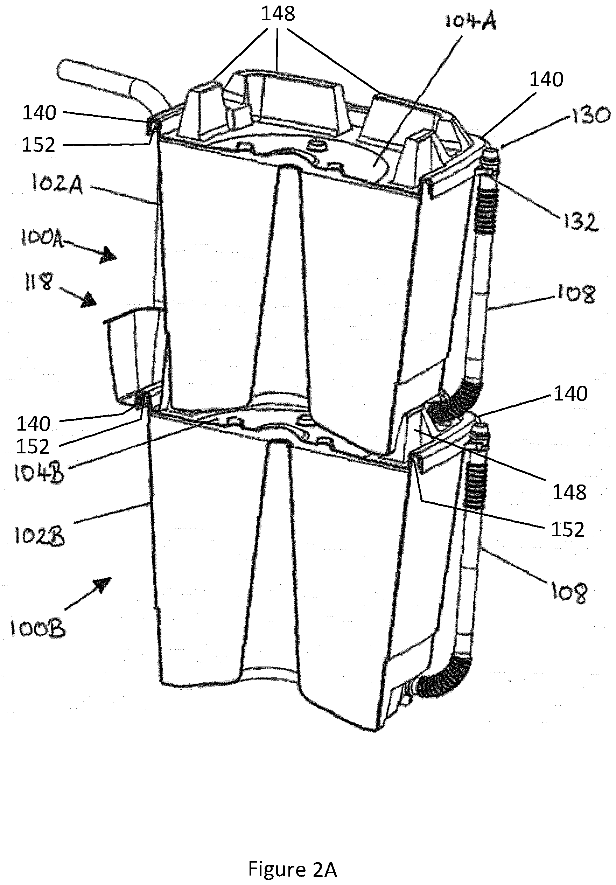

Figure 2A shows a cut-away perspective view of a stacked pair of modules 100A and 100B, which are similar to those of Figure 1A. Wall sections 148 on each lid 104A and 104B fit to each base 102A and are provided to hold the bottom of each base 102A in location on the lid. Also, a lip 140 is provided on each lid 104A, which fits to the base 102B and hold the lid in place on the upper rim 152 of each base 102A.

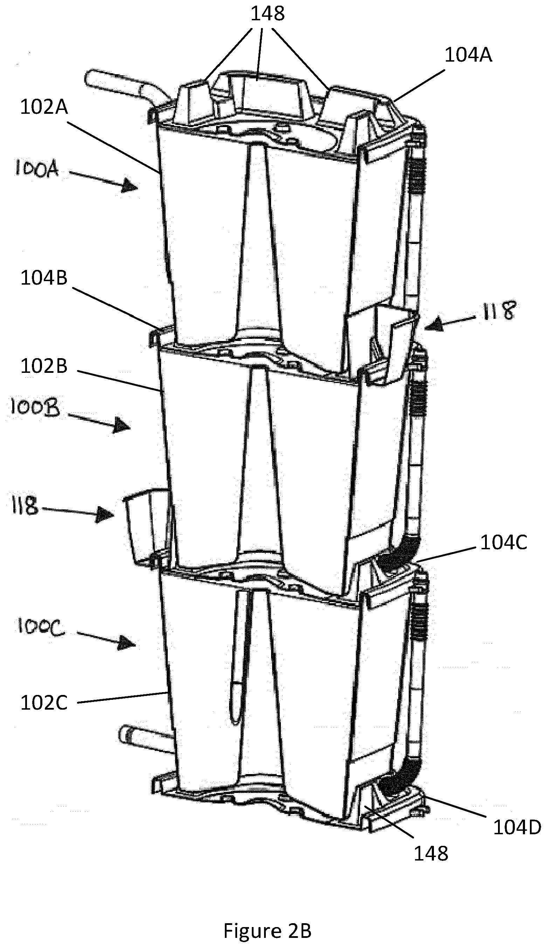

Although it has been described with respect to Figure 1A that excess water flows out of the lowest base reservoir through a waste pipe to the local drainage system, alternatively, a further lid is provided beneath the lowest base reservoir, and a lid outlet pipe is connected to the corresponding lid reservoir through a waste overflow port provided in the lid. Accordingly, Figure 2B shows a similar arrangement to Figure 2A, but with a stack of three modules, 100A, 100B and 100C, in which the lowest base 102C stands on a further lid 104D (the lid outlet pipe is now shown). Advantageously such an arrangement enables one or more further planters to be provided around the bottom of the base of the lowest module in the stack of modules, and enables all of the bases 102A, 102B and 102C to be identical in design, simplifying manufacture, transport and assembly.

In an alternative embodiment (not illustrated), a waste tube is connected directly to the base reservoir overflow to collect overflowing water, and carry it away from the water storage system. In this case, the lowest base may be raised above the ground on a stand.

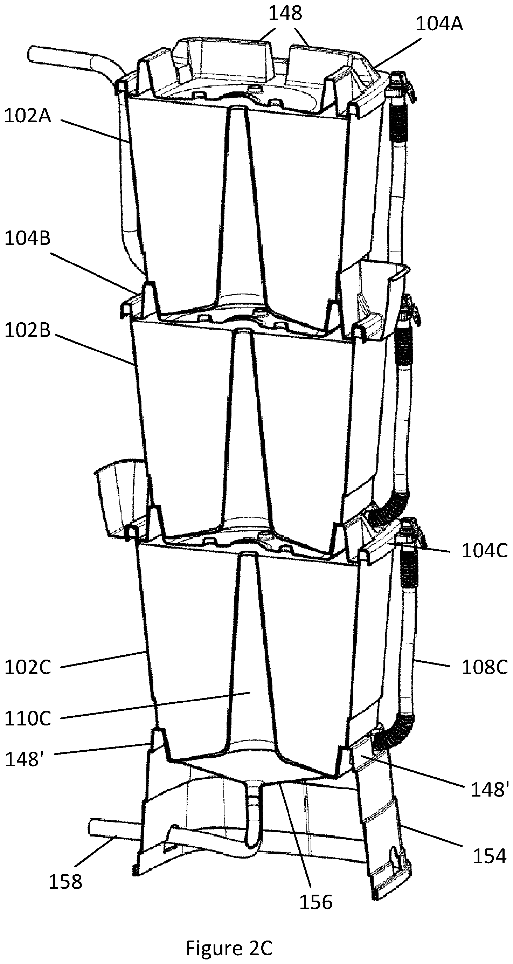

Alternatively, a support unit 154 is provided beneath the lowest base 102C to collect excess water that flows out of the lowest base reservoir, which is provided with a support unit outlet tube 158 to conduct the excess water from the water storage system, as illustrated in Figure 2C. Accordingly, the support unit 154 raises the lowest base 102C above ground level (like a plinth beneath a statue). The lowest base 102C is held in place on the support unit 154, for example by the support unit having peripheral wall sections 148' corresponding with the arrangement of peripheral wall sections 148 on the corresponding lids 104A, 104B and 104C. The support unit 154 has a water collection element 156 (e.g. a funnel-like element) to collect excess water overflowing through the base reservoir overflow 110C, and channel the water through the support unit outlet tube 158. Advantageously, this enables all of the lids 104A, 104B and 104C to be of identical design, and to enable more convenient access to the drain tube 108C of the lowest base 102C.

In a further alternative (not illustrated), a support unit may be provided which has a rim that is shaped like that of a base unit, to hold a lid in place on the support unit, such that a lid may be provided between the lower base and the support unit. Advantageously, this enables planters to be provided around the bottom of the base of the lowest module.

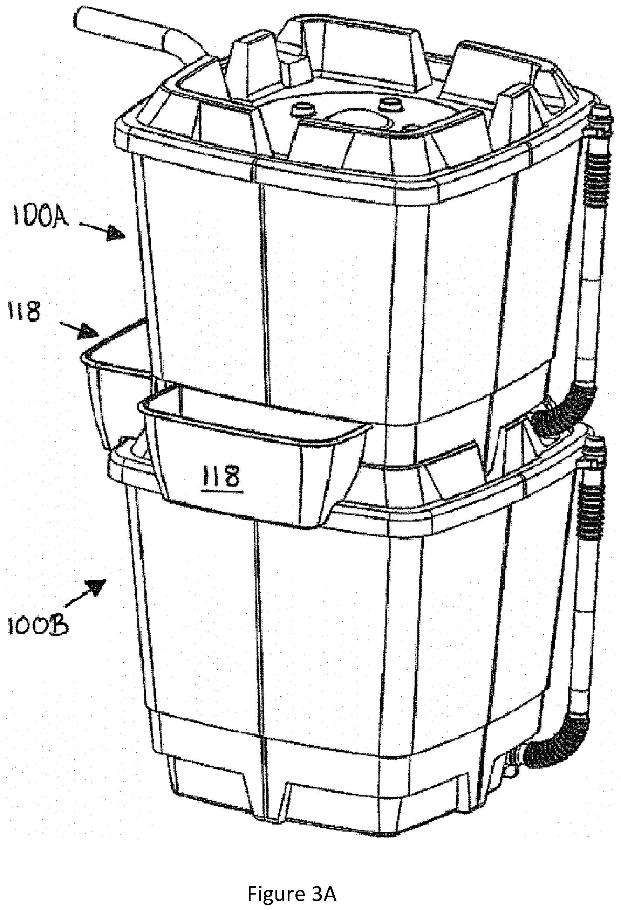

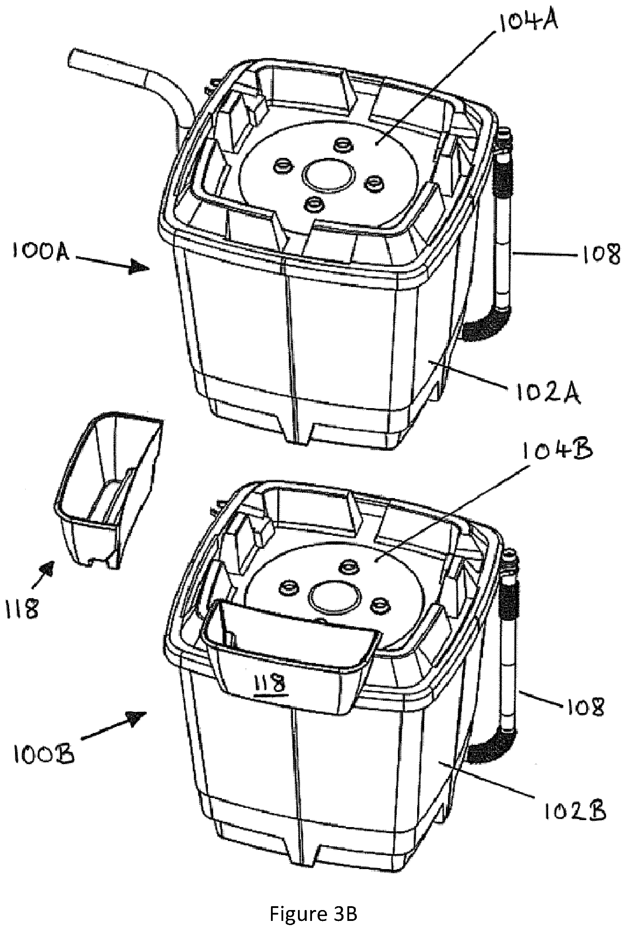

Figure 3A shows a perspective view of a stacked pair of modules 100A and 100B, with a pair of planters 118 received onto the lower lid 104B. Further planters 118 can be provided on other sides of the lower lid 104B and around the sides of the upper lid 104A. Figure 3B shows a corresponding arrangement in exploded view.

Although Figures 1A to 2B only refer to single column stacks of water storage modules, it will be appreciated that further modules may be arranged adjacent the first stack. Accordingly, a two- or three-dimensional arrangement of modules may be constructed. The versatility of the modules permits their arrangement into blocks that best suit the space available.

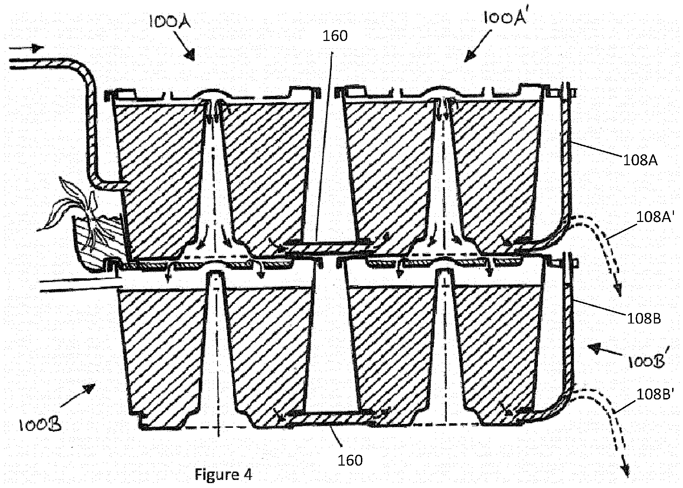

In the case of more than one column of water storage modules, modules that are on the same level may be interconnected by interconnection tubes (advantageously connecting between ports close to the bottom of the bases). Interconnection ports may be provided in base units to facilitate such interconnection. Accordingly, by use of laterally interconnected modules in a multicolumn arrangement, it is possible to form larger, common bodies of water that can each be drawn out through a common drain tube. Figure 4 shows such an arrangement, in the case of a 2x2 array of modules 100A, 100B, 100A' and 100B', in which the upper and lower bases are each respectively interconnected by an interconnection pipe 160, with the drain tubes shown in the raised 108A and 108B and lowered 108A' and 108B' positions.

Although the water storage modules have been described in the illustrations as comprising a lid that is received onto the top of a base, it will be appreciated that the present invention concerns a modular system, and accordingly a module may equally be considered to comprise a base that is received onto a lid.

The figures provided herein are schematic and not to scale.

## Claims

1. A stackable water storage module (100, 100A, 100B, 100C, 100', 100A', 100B') comprising a base portion (102A, 102B, 102C) and a lid portion (104A, 104B, 104C, 104D), wherein:
the base portion (102A, 102B, 102C) is adapted to receive the lid portion (104A, 104B, 104C, 104D),
the base portion (102A, 102B, 102C) has a base reservoir (106A, 106B) for storing water,
**characterised in that** the lid portion (104A, 104B, 104C, 104D) is adapted to receive a further base portion (102A, 102B, 102C),
the lid portion (104A, 104B, 104C, 104D) has a lid reservoir (116A, 116B) for storing water and a lid reservoir overflow (124) adapted for water to overflow from the lid reservoir (116A, 116B) to the base reservoir (106A, 106B),
the base portion (102A, 102B, 102C) has a base reservoir overflow (110, 110C) adapted for water to overflow from the base reservoir (106A, 106B) to a lid reservoir (116A, 116B) of a further lid portion (104A, 104B, 104C, 104D), and
the lid portion (104A, 104B, 104C, 104D) is adapted to receive a planter (118) in fluid communication with the lid reservoir (116A, 116B).

2. A module according to claim 1 wherein the base portion (102A, 102B, 102C) and lid portion (104A, 104B, 104C, 104D) are separately formed.

3. A module according to claim 2 wherein the base portion (102A, 102B, 102C) comprises a base portion body (102') configured to nest with a further base portion body (102') of a further base portion (102A, 102B, 102C).

4. A module according to claim 1, wherein the base portion and lid portion are integrally formed.

5. A module according to any preceding claim, wherein the lid portion (104A, 104B, 104C, 104D) is adapted to receive a planter (118) at an edge of the lid portion (104A, 104B, 104C, 104D), and comprises a planter (118) received at an edge of the lid portion (104A, 104B, 104C, 104D).

6. A module according to claim 5, wherein the planter (118) is adapted to irrigate a growing medium (120) contained therein by capillary action through growing medium (120) that is provided within a reservoir communication portion (144) of the planter (118).

7. A module according to claim 5, wherein the planter (118) is provided with a wick adapted to irrigate a growing medium (120) contained therein by wicking water from the lid reservoir (116A, 116B) into the growing medium (120).

8. A module according to any preceding claim, wherein the base portion (102A, 102B, 102C) is provided with a drain tube (108, 108C).

9. A module according to claim 8, wherein the drain tube (108, 108A, 108B) is a flexible tube or wherein the drain tube (108C) comprises a flexible tube portion.

10. A module according to any preceding claim, wherein the lid portion and/or the base portion (102A, 102B, 102C) has a waste overflow port.

11. A module according to any preceding claim, comprising a support unit (154) configured to fit with a base portion (102A, 102B, 102C) or a lid portion, the support unit (154) having a water collection element (156) and a support unit outlet tube (158), wherein the water collection element (156) is adapted to collect water flowing onto the support unit (154) from the base portion (102A, 102B, 102C) or lid portion and channel the water to the support unit outlet tube (158).

12. A module according to any preceding claim, wherein the outlet of the base reservoir overflow (110, 110C) is laterally offset from the inlet of the lid reservoir overflow (124) in the orientation of normal use.

13. A module according to any preceding claim, wherein the module (100) is adapted to be interconnected with a further module (100A, 100B, 100A', 100B') in a lateral interconnection arrangement (160), in the orientation of normal use.

14. A water storage system comprising at least two base portions (102A, 102B, 102C) and a lid portion (104A, 104B, 104C, 104D) according to any preceding claim.

15. A water storage system according to claim 14 comprising a plurality of modules (100, 100A, 100B, 100C, 100', 100A', 100B').

## Patentansprüche

1. Stapelbares Wasserspeichermodul (100, 100A, 100B, 100C, 100', 100A', 100B'), umfassend ein Basisteil (102A, 102B, 102C) und ein Deckelteil (104A, 104B, 104C, 104D), wobei:
das Basisteil (102A, 102B, 102C) zur Aufnahme des Deckelteils (104A, 104B, 104C, 104D) geeignet ist,
das Basisteil (102A, 102B, 102C) einen Basisbehälter (106A, 106B) zum Speichern von Wasser aufweist, **dadurch gekennzeichnet, dass** das Deckelteil (104A, 104B, 104C, 104D) geeignet, ein weiteres Basisteil (102A, 102B, 102C) aufzunehmen,
wobei: das Deckelteil (104A, 104B, 104C, 104D) einen Deckelbehälter (116A, 116B) zum Speichern von Wasser und einen Deckelbehälterüberlauf (124), der dafür geeignet ist, dass Wasser vom Deckelbehälter (116A, 116B) zum Basisbehälter (106A, 106B) überläuft, aufweist,
das Basisteil (102A, 102B, 102C) einen Basisbehälterüberlauf (110, 110C) aufweist, der dafür geeignet ist, dass Wasser vom Basisbehälter (106A, 106B) zu einem Deckelbehälter (116A, 116B) eines weiteren Deckelteils (104A, 104B, 104C, 104D) überläuft, und
das Deckelteil (104A, 104B, 104C, 104D) geeignet ist, ein Pflanzgefäß (118) in Fluidverbindung mit dem Deckelbehälter (116A, 116B) aufzunehmen.

2. Modul nach Anspruch 1, wobei das Basisteil (102A, 102B, 102C) und das Deckelteil (104A, 104B, 104C, 104D) getrennt ausgebildet sind.

3. Modul nach Anspruch 2, wobei das Basisteil (102A, 102B, 102C) einen Basisteilkörper (102') umfasst, der gestaltet ist, um mit einem weiteren Basisteilkörper (102') eines weiteren Basisteils (102A, 102B, 102C) ineinander gesteckt zu sein.

4. Modul nach Anspruch 1, wobei das Basisteil und das Deckelteil einstückig ausgebildet sind.

5. Modul nach einem der vorhergehenden Ansprüche, wobei das Deckelteil (104A, 104B, 104C, 104D) geeignet ist, ein Pflanzgefäß (118) an einem Rand des Deckelteils (104A, 104B, 104C, 104D) aufzunehmen, und ein Pflanzgefäß (118) umfasst, das an einem Rand des Deckelteils (104A, 104B, 104C, 104D) aufgenommen ist.

6. Modul nach Anspruch 5, wobei das Pflanzgefäß (118) geeignet ist, ein darin enthaltenes Zuchtmedium (120) durch Kapillarwirkung durch das Zuchtmedium (120), das in einem Behälterverbindungsteil (144) des Pflanzgefäßes (118) vorgesehen ist, zu bewässern.

7. Modul nach Anspruch 5, wobei das Pflanzgefäß (118) mit einem Docht versehen ist, der geeignet ist, ein darin enthaltenes Zuchtmedium (120) durch Eindringen von Wasser aus dem Deckelbehälter (116A, 116B) in das Zuchtmedium (120) zu bewässern.

8. Modul nach einem der vorhergehenden Ansprüche, wobei das Basisteil (102A, 102B, 102C) mit einem Ablassrohr (108, 108C) versehen ist.

9. Modul nach Anspruch 8, wobei das Ablassrohr (108, 108A, 108B) ein flexibles Rohr ist oder wobei das Ablassrohr (108C) einen flexiblen Rohrteil umfasst.

10. Modul nach einem der vorhergehenden Ansprüche, wobei das Deckelteil und/oder das Basisteil (102A, 102B, 102C) einen Abwasserüberlaufanschluss aufweist.

11. Modul nach einem der vorhergehenden Ansprüche, umfassend eine Unterstützungseinheit (154), die gestaltet ist, um mit einem Basisteil (102A, 102B, 102C) oder einem Deckelteil zusammenzupassen, wobei die Unterstützungseinheit (154) ein Wassersammelelement (156) und ein Unterstützungseinheit-Ausgangsrohr (158) aufweist, wobei das Wassersammelelement (156) geeignet ist, Wasser zu sammeln, das auf die Unterstützungseinheit (154) aus dem Basisteil (102A, 102B, 102C) oder Deckelteil strömt, und das Wasser zum Unterstützungseinheit-Ausgangsrohr (158) zu leiten.

12. Modul nach einem der vorhergehenden Ansprüche, wobei der Ausgang des Basisbehälterüberlaufs (110, 110C) seitlich vom Eingang des Deckelbehälterüberlaufs (124) in der Normalbenutzungsrichtung versetzt ist.

13. Modul nach einem der vorhergehenden Ansprüche, wobei das Modul (100) geeignet ist, mit einem weiteren Modul (100A, 100B, 100A', 100B') in einer seitlichen Verbindungsanordnung (160) in der Normalbenutzungsrichtung verbunden zu werden.

14. Wasserspeichersystem, umfassend mindestens zwei Basisteile (102A, 102B, 102C) und ein Deckelteil (104A, 104B, 104C, 104D) nach einem der vorhergehenden Ansprüche.

15. Wasserspeichersystem nach Anspruch 14, umfassend eine Vielzahl von Modulen (100, 100A, 100B, 100C, 100', 100A', 100B').

## Revendications

1. Module de stockage d'eau empilable (100, 100A, 100B, 100C, 100', 100A', 100B') comprenant une partie de base (102A, 102B, 102C) et une partie de couvercle (104A, 104B, 104C, 104D),
la partie de base (102A, 102B, 102C) étant adaptée pour recevoir la partie de couvercle (104A, 104B, 104C, 104D),
la partie de base (102A, 102B, 102C) possédant un réservoir de base (106A, 106B) pour le stockage de l'eau,
**caractérisé en ce que** la partie de couvercle (104A, 104B, 104C, 104D) est adaptée pour recevoir une autre partie de base (102A, 102B, 102C),
la partie de couvercle (104A, 104B, 104C, 104D) possédant un réservoir de couvercle (116A, 116B) pour le stockage de l'eau, et un trop-plein de réservoir de couvercle (124) adapté pour permettre le débordement de l'eau du réservoir de couvercle (116A, 116B) au réservoir de base (106A, 106B),
la partie de base (102A, 102B, 102C) possédant un trop-plein de réservoir de base (110, 110C) adapté pour permettre le débordement de l'eau du réservoir de base (106A, 106B) dans un réservoir de couvercle (116A, 116B) d'une autre partie de couvercle (104A, 104B, 104C, 104D), et
la partie de couvercle (104A, 104B, 104C, 104D) étant adaptée pour recevoir un semoir (118) en communication fluidique avec ledit réservoir de couvercle (116A, 116B).

2. Module selon la revendication 1, la partie de base (102A, 102B, 102C) et la partie de couvercle (104A, 104B, 104C, 104D) étant formées séparément.

3. Module selon la revendication 2, la partie de base (102A, 102B, 102C) comprenant un corps de partie de base (102') configuré pour s'emboîter dans un autre corps de partie de base (102') d'une autre partie de base (102A, 102B, 102C).

4. Module selon la revendication 1, la partie de base et la partie de couvercle étant formées de façon intégrale.

5. Module selon une quelconque des revendications précédentes, la partie de couvercle (104A, 104B, 104C, 104D) étant adaptée pour recevoir un semoir (118) sur un bord de la partie de couvercle (104A, 104B, 104C, 104D), et comprenant un semoir (118) reçu sur un bord de la partie de couvercle (104A, 104B, 104C, 104D).

6. Module selon la revendication 5, le semoir (118) étant adapté pour irriguer un milieu de culture (120) contenu dans celui-ci par une action capillaire à travers le milieu de culture (120) fourni au sein d'une partie de communication à réservoir (144) du semoir (118).

7. Module selon la revendication 5, le semoir (118) étant doté d'une mèche adaptée pour irriguer un milieu de culture (120) contenu dans celui-ci en drainant de l'eau du réservoir de couvercle (116A, 116B) dans le milieu de culture (120).

8. Module selon une quelconque des revendications précédentes, la partie de base (102A, 102B, 102C) étant munie d'un tube de drainage (108, 108C).

9. Module selon la revendication 8, le tube de drainage (108, 108A, 108B) étant un tube flexible, ou le tube de drainage (108C) comprenant une partie de tube flexible.

10. Module selon une quelconque des revendications précédentes, la partie de couvercle et/ou la partie de base (102A, 102B, 102C) possédant un orifice de débordement de l'eau usée.

11. Module selon une quelconque des revendications précédentes, comprenant un support (154) configuré pour s'adapter avec une partie de base (102A, 102B, 102C) ou une partie de couvercle, le support (154) possédant un collecteur d'eau (156) et un tube de sortie du support (158), le collecteur d'eau (156) étant adapté pour recueillir de l'eau s'écoulant sur le support (154) depuis la partie de base (102A, 102B, 102C) ou la partie de couvercle, et acheminer l'eau vers le tube de sortie du support (158).

12. Module selon une quelconque des revendications précédentes, la sortie du trop-plein du réservoir de base (110, 110C) étant décalée latéralement de l'entrée du trop-plein de réservoir de couvercle (124) dans le sens de l'utilisation normale.

13. Module selon une quelconque des revendications précédentes, le module (100) étant adapté pour s'interconnecter avec un autre module (100A, 100B, 100A', 100B') dans un agencement d'interconnexion latérale (160), orienté dans le sens de l'utilisation normale.

14. Système de stockage d'eau comprenant au moins deux parties de base (102A, 102B, 102C) et une partie de couvercle (104A, 104B, 104C, 104D) selon une quelconque des revendications précédentes.

15. Système de stockage d'eau selon la revendication 14, comprenant une pluralité de modules (100, 100A, 100B, 100C, 100', 100A', 100B').
